# NEUE EUROPÄISCHE PATENTSCHRIFT

(11) **EP 1 642 498 B2**
(45) Veröffentlichungstag und Bekanntmachung des Hinweises auf die Entscheidung über den Einspruch: **09.02.2011**
(45) Hinweis auf die Patenterteilung: 16.01.2008
(21) Anmeldenummer: 05020330.6
(22) Anmeldetag: 17.09.2005
(51) Int. Cl.: A01N 43/40, A01N 25/04, A01N 25/08

(54) **Wässrige Dispersionen enthaltend Diflufenican**
Aqueous dispersions comprising diflufenican
Dispersions aqueuses comprenant du diflufenican

(30) Priorität: 01.10.2004 DE 102004047927
(43) Veröffentlichungstag der Anmeldung: 05.04.2006
(73) Patentinhaber: Bayer CropScience AG, 40789 Monheim (DE)
(72) Erfinder: Frisch, Gerhard, Dr., 61273 Wehrheim (DE); Ebersold, UIrike, 65795 Hattersheim (DE)

(56) Entgegenhaltungen:
- WO-A-02/19821
- WO-A1-2004/073403
- US-A- 4 618 366
- BRITISH CROP PROTECTION COUNCIL: "-Diflufenican (251)-" THE E-PESTICIDE MANUAL -THIRTEENTH EDITION, 2003, XP002367688 BCPC (British Crop Protection Council) ISBN: 1-901396-34-7

## Beschreibung

Die vorliegende Erfindung betrifft das Gebiet der Pflanzenschutzmittel-formulierungen. Insbesondere betrifft die Erfindung Formulierungen in Form von wässrigen Dispersionen, welche den herbiziden Wirkstoff Diflufenican enthalten und frei von Alkylphenolpolyethoxylaten sind.

Herbizide Wirkstoffe werden im Allgemeinen nicht in ihrer reinen Form eingesetzt. In Abhängigkeit von dem Anwendungsgebiet und der Anwendungsart, sowie von physikalischen, chemischen und biologischen Parametern werden die Wirkstoffe in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von herbiziden Wirkstoffen sollten im Allgemeinen eine hohe chemische und physikalische Stabilität, eine gute Applizierbarkeit und Anwenderfreundlichkeit und eine breite biologische Wirkung mit hoher Selektivität aufweisen. Der herbizide Wirkstoff Diflufenican wird unter Anderem als wässriges Suspensionskonzentrat - Handelsname Azur® - verwendet. Nachteil der diesem Produkt zu Grunde liegenden Formulierung ist die Tatsache, dass es Tenside aus der Gruppe der Alkylphenolpolyethoxylate enthält. Alkylphenolpolyethoxylate werden auf Grund ihrer sehr schlechten biologischen Abbaubarkeit als toxikologisch bedenklich eingestuft. So ist ihre Verwendung in Waschmitteln seit vielen Jahren in vielen Ländern nicht mehr gestattet. Die Verwendung von Alkylphenolpolyethoxylaten in Pflanzenschutzmittel-Formulierungen wird in Kürze verboten werden.

Die Aufgabe der vorliegenden Erfindung bestand darin, eine wässrige Pflanzenschutzmittelformulierung für den Wirkstoff Diflufenican bereit zu stellen, die frei von Alkylphenolpolyethoxylaten ist.

Diese Aufgabe wird gelöst durch wässrige, Diflufenican und ein anionisches Tensid aus der Gruppe der Kondensationsprodukte von Naphthalinsulfonaten mit Formaldehyd enthaltende Dispersionen gemäß Anspruch 1.

Die vorliegende Erfindung betrifft somit wässrige, den herbiziden Wirkstoff Diflufenican und ein anionisches Tensid aus der Gruppe der Kondensationsprodukte von Naphthalinsulfonaten mit Formaldehyd enthaltende Dispersionen, die frei von Alkylphenolpolyethoxylaten sind gemäß Anspruch 1.

Die erfindungsgemäßen Dispersionen zeigen eine hervorragende Lagerstabilität. Sie sind bei Raumtemperatur mindestens 2 Jahre lagerstabil und zeigen dabei kein Kristallwachstum.

Diese Dispersionen enthalten
a) 0,1 bis 50% Diflufenican,
b) 1 bis 20% eines anionischen Tensids aus der Gruppe der Kondensationsprodukte von Naphthalinsulfonaten mit Formaldehyd,
c) 0,01 bis 5% eines Verdickers,
d) 0 bis 45% eines oder mehrerer weiterer von a) verschiedene agrochemische Wirkstoffe,
e) 0 bis 15% weitere Hilfs- und Zusatzstoffe, und
f) 20 bis 50% Wasser.

Bevorzugt sind erfindungsgemäße Dispersionen, worin
a) 0,5 bis 15% Diflufenican,
b) 1,5 bis 15% eines Tensids,
c) 0,05 bis 2,5% eines Verdickers,
d) 3,5 bis 40% eines oder mehrerer weiterer von a) verschiedene agrochemische Wirkstoffe,
e) 0 bis 15% weitere Hilfs - und Zusatzstoffe, und
f) 20 bis 50% Wasser.

Besonders bevorzugt sind erfindungsgemäße Dispersionen, worin
a) 0,5 bis 15% Diflufenican,
b) 2 bis 10% eines Tensids,
c) 0,075 bis 1,5% eines Verdickers,
d) 3,5 bis 40% eines oder mehrerer weiterer von a) verschiedene agrochemische Wirkstoffe,
e) 0 bis 15% weitere Hilfs - und Zusatzstoffe, und
f) 20 bis 50% Wasser.

Alle Prozentangaben sind Gewichtsprozente.

Beispiele für anionische Tenside b) sind Galoryl® DT 201 (Naphthalinsulfonsäure Hydroxypolymer mit Formaldeyd und Methylphenol Natriumsalz), Galoryl® DT 250 (Kondensationsprodukt aus Phenol- und Naphthalinsulfonaten) und Reserve® C (Kondensationsprodukt aus Phenol- und Naphthalinsulfonaten).

Geeignete Verdickungsmittel sind beispielsweise:
1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel)
2) synthetische Silikate, wie Silikate der Sipernat®-, Aerosil®- oder Durosil®-Reihe (Degussa), der CAB-O-SIL®-Reihe (Cabot) oder der Van Gel-Reihe (R.T. Vanderbilt),
3) Verdicker auf Basis synthetischer Polymere, wie Verdicker der Thixin®- oder Thixatrol®-Reihe (Elementis) sowie Rhodopol® (Rhodia) und Kelzan® S (Kelco Corp.).

Bevorzugt sind Verdicker aus der Gruppe der Bentonite.

Als agrochemische Wirkstoffe der Gruppe d) sind geeignet Herbizide wie Flufenacet, Flurtamone, loxynil, Bromoxynil, Wirkstoffe auf Phenylharnstoffbasis wie Isoproturon, Diuoron, Afalon, Wirkstoffe auf Basis vonPhenoxyessig- bzw -propion- und - buttersäuren wie MCPA, CMPP DMA Salz, 2,4-D, Fluazifop-butyl, Diclofop-methyl, Fenoxaprop-P-ethyl, sowie jeweils deren Derivate in Form von Säuren oder Estern. Diese Wirkstoffe sind z.B. bekannt aus "The Pesticide Manual", 12. Auflage (2000), The British Crop Protection Council.

Die weiteren Hilfs- und Zusatzstoffe e) sind beispielsweise Frostschutzmittel, Entschäumer, strukturbildende Stoffe, Konservierungsmittel, Farb- und Duftstoffe, Netz-, Anti-Drift-, Haft-, Penetrationsmittel, Antioxidantien,sowie weitere Tenside.

Geeignete Frostschutzmittel sind solche aus der Gruppe der Harnstoffe, Diole und Polyole, wie Ethylenglycol und Propylenglycol.
Geeignete Entschäumer sind solche auf Basis von Siliconen.
Geeignete strukturbildende Stoffe sind solche aus der Gruppe der Xanthane. Geeignete Konservierungsmittel, Farb- und Duftstoffe sind dem Fachmann bekannt. Geeignete weitere Tenside sind beispielsweise Emulgatoren und Dispergatoren.

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   · mit 8 bis 24 C-Atomen im Alkylrest, der sich von den entsprechenden Fettsäuren oder aus petrochemischen Produkten ableitet, und
   · mit 1 bis 100, vorzugsweise 2 bis 50, Ethylenoxideinheiten (EO), wobei die freie Hydroxy-Gruppe gegebenenfalls alkoxyliert ist,
   · die z. B. kommerziell als Genapol® X- und Genapol® O-Reihe (Clariant), Crovol® M-Reihe (Croda) oder Lutensol® Reihe (BASF) erhältlich sind,
2) polyalkoxylierte, vorzugsweise polyethoxylierte Hydroxyfettsäuren oder
   Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. EMULSOGEN® EL-Reihe (CLARIANT) oder AGNIQUE® CSO-Reihe (COGNIS),
3) polyalkoxylierte, vorzugsweise polyethoxylierte Sorbitanester, wie z. B. Atplus®309 F (UNIQEMA) oder Alkamuls®-Reihe (Rhodia)
4) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. GENAPOL®PF-Reihe (CLARIANT), PLURONIC®-Reihe (BASF), oder SYNPERONIC®PE-Reihe (UNIQEMA),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol®LRO oder Dispergiermittel 3618 (Clariant), Emulphor® (BASF) oder Crafol® AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox® 3377BM (ICI), Empiphos®TM-Reihe (Huntsman)
3) Polyelektrolyte, wie Ligninsulfonate, Polystyrolsulfonat oder sulfonierte ungesättigte oder aromatische Polymere (Polystyrole, Polybutadiene oder Polyterpene), wie Tamol®-Reihe (BASF), Kraftsperse®-Reihe (Westvaco), Borresperse®-Reihe (Borregard).

Bevorzugte ionische Emulgatoren/Dispergatoren sind z.B. Salze von Alkylarylsulfonsäuren .

Die vorstehend genannnten Formulierungshilfsmittel der Gruppen b), c) und e) sind dem Fachmann bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Zur Anwendung können die erfindungsgemäßen Dispersionen in üblicher Weise verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Dispersionen.

Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.
Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, lpomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die erfindungsgemäßen herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßenherbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße herbizide Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Die Herstellung der erfindungsgemäßen Dispersionen wird in dem Fachmann bekannter Weise beispielsweise durch Nassvermahlung mittels Perlmühle bewerkstelligt, siehe dazu Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

In der nachfolgenden Tabelle finden sich Beispiele für erfindungsgemäße wässrige Dispersionen.

Die in den nachfolgenden Beispielen verwendeten Begriffe haben folgende Bedeutung:
- Bentone® EW: = modifiziertes Schichtsilikat, Elementis
- Bentone® SD-2: = modifiziertes Schichtsilikat, Elementis
- Galoryl® DT 201: = Natriumalkylnaphthalin-sulfonat, CFPI-Nufarm
- Galoryl® DT 250: = Natriumalkylphenol/formaldehyd- sulfonate, CFPI-Nufarm
- Crafol® AP 261: = Natriumlauryletherphosphat, Cognis
- Silcolapse® 5020: = Silikonentschäumer, Rhodia
- Attagel® 40: = modifiziertes Schichtsilikat, Engelhardt Corp.
- Rhodopol® 23: = Xanthan Derivat, Rhodia
- Acticide® MBS: = Biozid, Thor Chemie

### Herstellung einer wässrigen Dispersion:

Zur Herstellung der in Tabelle 1 genannten Beispiele wird zunächst Wasser vorgelegt. Unter Rühren werden anschließend Diflufenican sowie die weiteren Rezepturbestandteile zugesetzt. Die Reihenfolge der Zugabe der weiteren Komponenten spielt in der Regel keine Rolle.

**Tabelle 1 (Angaben erfolgen in Gewichtsprozent)**

| | **Komponente** | **Beispiel Nr.** | | | | | | | | | |
|---|---|---|---|---|---|---|---|---|---|---|---|
| | | **1** | **2** | **3** | **4** | **5** | **6** | **7** | **8** | **9** | **10** |
| a | Diflufenican | 1,80 | 1,80 | 5,00 | 2,00 | 2,00 | 2,50 | 3,00 | 5,00 | 1,90 | 3,00 |
| b | Galoryl DT 201 | 3,00 | 2,00 | | 4,00 | 2,5 | 3,00 | 5,00 | 2,80 | 2,20 | 2,00 |
| b | Galoryl DT 250 | | | 3,00 | | | | | | | |
| c | Bentone EW | | 0,10 | 0,50 | | 0,40 | 0,10 | | 0,50 | 0,10 | 0,60 |
| c | Bentone SD - 2 | 0,40 | | | 0,40 | | | 0,70 | | | |
| c | Attagel 40 | | | | | | | | | | 0,40 |
| d | loxynil | 9,00 | 8,70 | | | 9,00 | 8,00 | | 8,00 | 8,80 | 7,80 |
| d | Bromoxynil | | | 7,00 | | | | | | | |
| d | CMPP DMA Satz | | | | 10,00 | | | | | | |
| d | 2,4 D Na Salz | | | | | | | 12,00 | | | |
| d | Isoproturon | | 34,80 | | | 35,00 | 36,00 | 33,00 | 34,00 | 34,70 | 33,00 |
| d | Diuron | 35,00 | | 33,00 | | | | | | | |
| d | Afalon | | | | 22,00 | | | | | | |
| e | Propylenglykol | 8,00 | 8,00 | 6,00 | 10,00 | 7,00 | 6,00 | 9,00 | 6,00 | 8,00 | 8,00 |
| e | Harnstoff | | | 2,00 | | | | | | | |
| e | Dyasynsäure | | | 0,10 | | | | 0,10 | | | |
| e | Crafol AP 261 | 3,00 | 3,00 | 4,00 | 4,00 | 2,80 | 3,00 | 4,50 | 3,20 | 3,00 | 3,30 |
| e | Silcolapse 5020 | 0,50 | 0,50 | 0,80 | 0,10 | 0,50 | 0,50 | 0,30 | 0,40 | 0,30 | 0,40 |
| e | Rhodopol 23 | | 0,10 | | 0,10 | | 0,10 | | | 0,10 | |
| e | Acticide MBS | | 0,20 | | 0,10 | | 0,10 | | | 0,15 | |
| f | Wasser | 39,30 | 40,80 | 38,60 | 47,30 | 40,80 | 40,70 | 32,40 | 40,10 | 40,75 | 41,50 |
| | Gesamt: | 100 | 100 | 100 | 100 | 100 | 100 | 100 | | 100 | 100 |

### Chemische Stabilität der wässrigen Dispersion

Die erfindungsgemäßen Dispersionen der Beispiele 1 bis 10 weisen eine ausgezeichnete Lagerstabilität auf. Sie sind bei Raumtemperatur mindestens 2 Jahre und bei 50°C mindestens 3 Monate ohne erkennbare Veränderung stabil.

### Herbizide Wirkung

Die herbizide Wirkung der erfindungsgemäßen Dispersionen und
erfindungsgemäßen herbiziden Mitteln gegenüber allen wichtigen Schadpflanzen erreicht mindestens die Höhe der aus dem Stand der Technik bekannten Alkylphenolpolyethoxylaten haltigen Dispersionen beziehungsweise herbiziden Mitteln enthaltend Diflufenican.

## Patentansprüche

1. Wässrige, den herbiziden Wirkstoff Diflufenican und ein anionisches Tensid aus der Gruppe der Kondensationsprodukte von Naphthalinsulfonaten mit Formaldehyd enthaltende Dispersionen, die frei von Alkylphenolpolyethoxylaten sind,
enthaltend
a) 0,1 bis 50% Diflufenican,
b) 1 bis 20% eines anionischen Tensids aus der Gruppe der Kondensationsprodukte von Naphthalinsulfonaten mit Formaldehyd,
c) 0,01 bis 5% eines Verdickers,
d) 0 bis 45% eines oder mehrerer weiterer von a) verschiedene agrochemische Wirkstoffe,
e) 0 bis 15% weitere Hilfs- und Zusatzstoffe, und
f) 20 bis 50% Wasser.

2. Dispersionen gemäß Anspruch 1, enthaltend
a) 0,5 bis 15% Diflufenican,
b) 1,5 bis 15% eines Tensids,
c) 0,05 bis 2,5% eines Verdickers,
d) 3,5 bis 40% eines oder mehrerer weiterer von a) verschiedene agrochemische Wirkstoffe,
e) 0 bis 15% Hilfs - und Zusatzstoffe, und
f) 20 bis 50% Wasser.

3. Dispersionen gemäß Anspruch 1 oder 2 enthaltend
a) 0,5 bis 15% Diflufenican,
b) 2 bis 10% eines Tensids,
c) 0,075 bis 1,5% eines Verdickers,
d) 3,5 bis 40% eines oder mehrerer weiterer von a) verschiedene agrochemische Wirkstoffe,
e) 0 bis 15% Hilfs - und Zusatzstoffe, und
f) 20 bis 50% Wasser.

4. Dispersionen gemäß einem oder mehreren der Ansprüche 1 bis 3, worin der Verdicker c) aus der Gruppe der Bentonite stammt.

5. Verfahren zur Herstellung einer wässrigen Dispersion gemäß einem oder mehreren der Ansprüche 1 bis 4, worin die Komponenten gemischt und gegebenenfalls vermahlen werden.

6. Verfahren zur Bekämpfung von unerwünschtem Pflanzenwuchs, worin eine wirksame Menge einer wässrigen Dispersion gemäß einem oder mehreren der Ansprüche 1 bis 4 auf die Pflanzen, Teile der Pflanzen, das Saatgut oder die Fläche auf der Pflanzen wachsen, appliziert wird.

7. Verwendung einer wässrigen Dispersion gemäß einem oder mehreren der Ansprüche 1 bis 4, zur Bekämpfung von unerwünschtem Pflanzenwuchs.

8. Verwendung einer wässrigen Dispersion gemäß einem oder mehreren der Ansprüche 1 bis 4, zur Herstellung eines herbiziden Mittels.

9. Verwendung gemäß Anspruch 8, worin das herbizide Mittel eine Suspension oder Suspoemulsion ist.

10. Flüssiges herbizides Mittel, erhältlich durch Verdünnen einer wässrigen Dispersion gemäß einem oder mehreren der Ansprüche 1 bis 4.

11. Flüssiges herbizides Mittel gemäß Anspruch 10, worin das herbizide Mittel eine Emulsion, Suspension, Suspoemulsion oder Lösung ist.

12. Verfahren zur Bekämpfung von unerwünschtem Pflanzenwuchs, worin eine wirksame Menge eines herbiziden Mittels gemäß Anspruch 10 oder 11 auf die Pflanzen, Teile der Pflanzen, das Saatgut oder die Fläche auf der Pflanzen wachsen, appliziert wird.

13. Verwendung eines herbiziden Mittels gemäß Anspruch 10 oder 11, zur Bekämpfung von unerwünschtem Pflanzenwuchs.

## Claims

1. An aqueous dispersion, which comprises the herbicidal active substance diflufenican and an anionic surfactant from the group consisting of the condensation products of naphthalenesulfonates with formaldehyde and which is devoid of alkylphenol polyethoxylates, which comprises
a) 0.1 to 50% of diflufenican,
b) 1 to 20% of an anionic surfactant from the group consisting of the condensation products of naphthalenesulfonates with formaldehyde,
c) 0.01 to 5% of a thickener,
d) 0 to 45% of one or more additional agrochemical active substances other than a),
e) 0 to 15% of additional auxiliaries and additives, and
f) 20 to 50% of water.

2. A dispersion as claimed in claim 1, which comprises
a) 0.5 to 15 % of diflufenican,
b) 1.5 to 15 % of a surfactant,
c) 0.05 to 2.5% of a thickener,
d) 3.5 to 40% of one or more additional agrochemical active substances other than a),
e) 0 to 15% of auxiliaries and additives, and
f) 20 to 50% of water.

3. A dispersion as claimed in claim 1 or 2, which comprises
a) 0.5 to 15% of diflufenican,
b) 2 to 10% of a surfactant,
c) 0.075 to 1.5% of a thickener,
d) 3.5 to 40% of one or more additional agrochemical active substances other than a),
e) 0 to 15% of auxiliaries and additives, and
f) 20 to 50% of water.

4. A dispersion as claimed in one or more of claims 1 to 3, wherein the thickener c) originates from the group consisting of the bentonites.

5. A process for the preparation of an aqueous dispersion as claimed in one or more of claims 1 to 4, which comprises mixing the components and, if appropriate, milling them.

6. A method for combating undesirable plant growth, which comprises applying an effective amount of an aqueous dispersion as claimed in one or more of claims 1 to 4 to the plants, parts of the plants, the seeds or the area on which plants are growing.

7. The use of an aqueous dispersion as claimed in one or more of claims 1 to 4 for combating undesirable plant growth.

8. The use of an aqueous dispersion as claimed in one or more of claims 1 to 4 for the preparation of a herbicidal composition.

9. The use as claimed in claim 8, the herbicidal composition being a suspension or suspoemulsion.

10. A liquid herbicidal composition, which can be obtained by diluting an aqueous dispersion as claimed in one or more of claims 1 to 4.

11. A liquid herbicidal composition as claimed in claim 10, which is an emulsion, suspension, suspoemulsion or solution.

12. A method for combating undesirable plant growth, which comprises applying an effective amount of a herbicidal composition as claimed in claim 10 or 11 to the plants, parts of the plants, the seeds or the area on which plants are growing.

13. The use of a herbicidal composition as claimed in claim 10 or 11 for combating undesirable plant growth.

## Revendications

1. Dispersions aqueuses contenant la substance active herbicide diflufenican et un agent de surface anionique pris dans le groupe constitué par les produits de condensation de naphtalènesulfonates sur du formaldéhyde, qui sont exempts d'alkylphénolpolyéthoxylates, contenant
a) de 0,1 à 50 % de diflufenican,
b) de 1 à 20 % d'un agent de surface anionique pris dans le groupe constitué par les produits de condensation de naphtalènesulfonates sur du formaldéhyde,
c) de 0,01 à 5 % d'un épaississant,
d) de 0 à 45 % d'une ou plusieurs substances actives agrochimiques différentes de a),
e) de 0 à 15 % d' autres adjuvants et additifs, et
f) de 20 à 50 % d'eau.

2. Dispersions selon la revendication 1, contenant
a) de 0,5 à 15 % de diflufenican,
b) de 1,5 à 15 % d'un agent de surface,
c) de 0,05 à 2,5 % d'un épaississant,
d) de 3,5 à 40 % d'une ou plusieurs autres substances actives agrochimiques différentes de a),
e) de 0 à 15 % d'adjuvants et d'additifs, et
f) de 20 à 50 % d'eau.

3. Dispersions selon la revendication 1 ou 2, contenant
a) de 0,5 à 15 % de diflufenican,
b) de 2 à 10 % d'un agent de surface,
c) de 0,075 à 1,5 % d'un épaississant,
d) de 3,5 à 40 % d'une ou plusieurs autres substances actives agrochimiques différentes de a),
e) de 0 à 15 % d'adjuvants et d'additifs, et
f) de 20 à 50 % d'eau.

4. Dispersions selon une ou plusieurs des revendications 1 à 3, où l'épaississant c) provient du groupe des bentonites.

5. Procédé pour la préparation d'une dispersion aqueuse selon une ou plusieurs des revendications 1 à 4, où les composants sont mélangés et éventuellement broyés.

6. Procédé pour la lutte contre une croissance végétale indésirable, dans lequel une quantité efficace d'une dispersion aqueuse selon une ou plusieurs des revendications 1 à 4 est appliquée aux plantes, aux parties de plantes, à la semence ou à la surface où poussent les plantes.

7. Utilisation d'une dispersion aqueuse selon une ou plusieurs des revendications 1 à 4, dans la lutte contre une croissance végétale indésirable.

8. Utilisation d'une dispersion aqueuse selon une ou plusieurs des revendications 1 à 4, pour la préparation d'un agent herbicide.

9. Utilisation selon la revendication 8, où l'agent herbicide est une suspension ou suspoémulsion.

10. Agent herbicide liquide, que l'on peut obtenir par dilution d'une dispersion aqueuse selon une ou plusieurs des revendications 1 à 4.

11. Agent herbicide liquide selon la revendication 10, où l'agent herbicide est une émulsion, une suspension, une suspoémulsion ou une solution.

12. Procédé pour la lutte contre une croissance végétale indésirable, dans lequel une quantité efficace d'un agent herbicide selon la revendication 1 ou 2 est appliquée aux plantes, aux parties de plantes, à la semence ou à la surface où poussent les plantes.

13. Utilisation d'un agent herbicide selon la revendication 1 ou 2, dans la lutte contre une croissance végétale indésirable.
